# EUROPEAN PATENT APPLICATION

(11) **EP 0 741 494 A2**
(43) Date of publication of application: **06.11.1996**
(21) Application number: 96106867.3
(22) Date of filing: 01.05.1996
(51) Int. Cl.: H04N 5/232

(54) **Apparatus for compensating hand-trembling of camcorder using magnetic force and method thereof**

(30) Priority: 01.05.1995 KR 9510669
(71) Applicant: LG ELECTRONICS INC., Seoul (KR)
(72) Inventor: Ki, Hokyung, Kyungki-Do (KR); Kim, Sungbong, Kyungki-Do (KR)
(74) Representative: Cohausz & Florack

(57) **Abstract**

An improved apparatus for compensating a hand-trembling of a camcorder using a magnetic force and a method thereof, which is capable of capable of effectively compensating hand-trembling of a camcorder when photographing by providing a plurality of electromagnets at an inner circumferential surface of a camera lens barrel, and by supplying current thereto in a hand-trembling compensation mode of the operation, thereby magnetically floating lens groups within the camcorder barrel, which includes a key input unit provided with a hand trembling compensation mode key and a plurality of function keys; a controller for controlling a hand trembling compensation when a hand trembling compensation key of the key input unit is inputted; a current controller for controlling a current amount to be supplied to electromagnets in accordance with a control of the controller; and a magnetic flux generator for generating a magnetic force in accordance with a current supplied from the current controller, causing the lens group to be floated within a camera lens barrel, and compensating the movement of the lens group caused by a hand trembling.

## Description

### BACKGROUND OF THE INVENTION

### 1. Field of the Invention

The present invention relates to an apparatus for compensating hand-trembling of a camcorder (camera + video camera recorder) using a magnetic force and a method of thereof, and in particular to an apparatus for compensating hand-trembling of a camcorder using a magnetic force and a method thereof capable of effectively compensating hand-trembling of a camcorder when photographing by providing a plurality of electromagnets at an inner circumferential surface of a camera lens barrel, and by supplying current thereto in a hand-trembling compensation mode of the operation, thereby magnetically floating lens groups within the camera lens barrel.

### 2. Description of the Conventional Art

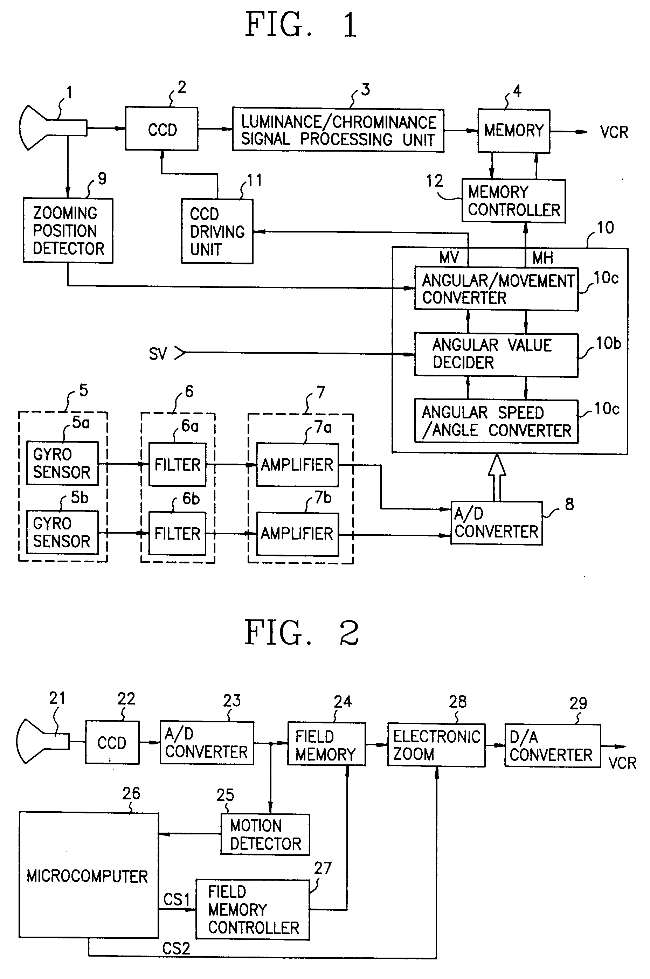

As shown in Fig. 1, a conventional hand-trembling compensation apparatus includes a charge coupled device 2 (CCD) for converting light incident thereon through a lens group 1 into a video signal, a luminance/chrominance signal processing unit 3 for recording luminance and chrominance signals of a video signal outputted from the CCD 2, a memory device 4 for storing a video signal outputted from the luminance and chrominance processing unit 3, a hand-trembling sensor 5 including gyro sensors 5a and 5b for sensing the movement of the lens group 1 as an angular speed value and outputting the thusly sensed angular speed value, a filter 6 including filters 6a and 6b for filtering the angular speed value outputted from the hand-trembling sensor 5, an amplifier 7 including amplifiers 7a and 7b for amplifying the angular speed value outputted from the filter 6 up to a predetermined level, an analog/digital converter 8 (A/D converter) for converting an angular speed value outputted from the amplifier 7 into a digital value, a zoom position detector 9 for detecting a zoom lens position of the lens group, a microcomputer 10 for converting an angular speed value outputted from the analog/digital converter 8 into horizontal and vertical movements MH and MV of the lens group in accordance with a zoom lens position detected by the zoom position detector 9 and an externally applied shutter information velocity and for controlling horizontal and vertical movements MH and MV of the lens group 1 in accordance with the thusly converted horizontal and vertical movements MH and MV, a CCD driving unit 11 for vertically moving an image photographed by the CCD 2 in accordance with a vertical movement MV converted by the microcomputer 10, and a memory controller 12 for horizontally moving a video signal stored in the memory device 4 in accordance with a horizontal movement MH converted by the microcomputer 10.

The microcomputer 10 includes an angular speed/angle converter 10a for integrating an angular speed value outputted from the analog/digital converter 8 and for converting the value into an angular value, an angular decider 10b for deciding an angular value converted by the angular speed/angle converter 10a in accordance with an externally applied shutter information velocity SV, and an angular movement converter 10c for converting an angular value decided by the angular decider 10b in accordance with a zoom lens position detected by the zoom position detector 9 into vertical and horizontal movements MV and MH and for outputting the movements, respectively.

Referring to Fig. 2, another embodiment of a conventional hand-trembling compensation apparatus of a camcorder includes a CCD 22 for converting a light incident thereon through a lens group 21, an analog/digital converter 23 for converting an video signal outputted from the CCD 22 into a digital video signal, a field memory 24 for storing a digital video signal outputted from the analog/digital converter 23 by a unit of field, a moving vector detector 25 for detecting as a vector value a movement of each pixel containing a digital video signal outputted from the analog/digital converter 23, a microcomputer 26 for recognizing a movement vector value detected by the moving vector detector 25, comparing the thusly recognized value with a previously set movement vector value, and for generating first and second control signals CS1 and CS2 for controlling an image trembling compensation in accordance with a result of the comparison, a field memory controller 27 for removing pixels which is obtained due to a hand trembling among pixels corresponding to a digital video signal stored in the field memory 24, an electronic zoom 28 for zooming a digital video signal outputted from the field memory 24 in accordance with a second control signal CS2 outputted from the microcomputer 26, and a digital/analog converter 29 for converting a digital video signal zoomed by the electronic zoom 28 into an analog video signal and for outputting the signal to a video cassette tape recorder (VCR).

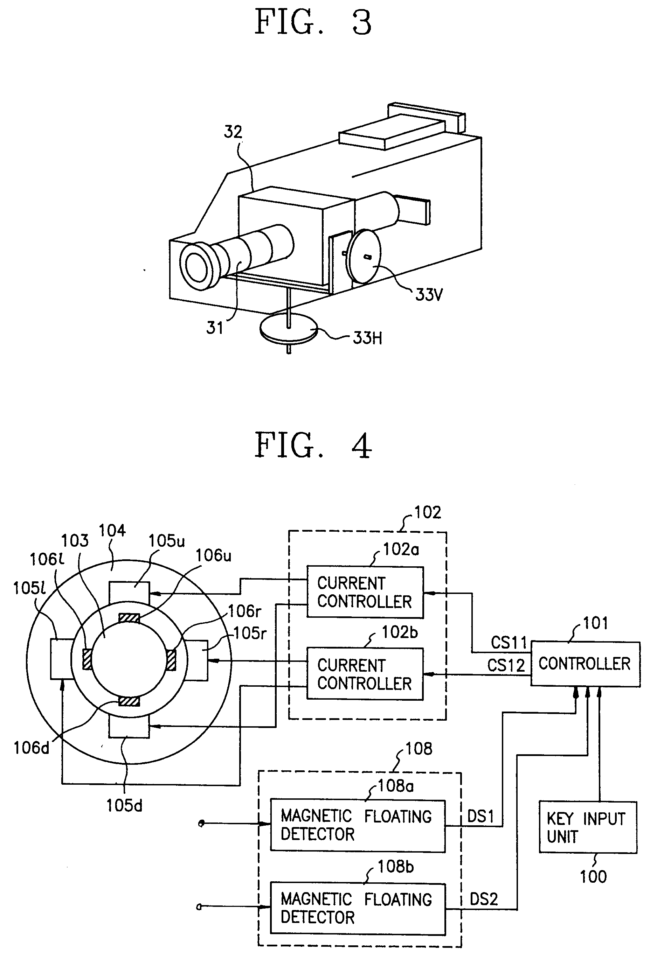

As shown in Fig. 3, still another conventional hand trembling compensation apparatus of a camcorder includes a horizontal actuator 33H and a vertical actuator 33V for correcting horizontal and vertical movements of a lens group 31 and a CCD 32 which are caused by a hand trembling, and a signal processing unit (not illustrated) for processing and recording a signal in a VCR an video signal inputted thereto through the lens group 31 and the CCD 32 of which the horizontal and vertical movements are compensated by the horizontal actuator 33H and the vertical actuator 33V.

An operation of the conventional hand trembling correction apparatus of a camcorder will be described in detail with reference to the accompanying drawings.

First, as shown in Fig. 1, during an operation of a conventional hand trembling compensation apparatus of a camcorder, the gyro sensor 5a of the hand trembling sensor 5 senses a upward and downward trembling of a lens group, and a gyro sensor 5b senses a rightward and leftward trembling of a lens group as an angular speed value. Next, the filters 6a and 6b filter an angular speed value, respectively, sensed by the gyro sensors 5a and 5b, and then the filtered angular speed value is amplified by the amplifiers 7a and 7b to a predetermined level and then converted into a digital angular speed value by the A/D converter.

Next, the angular speed/angle converter 10a of the microcomputer integrates the digital angular speed value converted by the A/D converter and then converts the value into an angular value, and the angular value decider 10b decides the angular value converted by the angular speed/angle converter in accordance with an externally applied shutter information velocity value.

Meanwhile, the zoom position detector 9 detects a position of the zoom lens (not illustrated) of the lens group 1.

Next, the angular movement converter 10c of the microcomputer 10 converts an angular value decided by the angular value decider 10b in accordance with a zoom lens position detected by the zoom position detector into vertical and horizontal movement values MV and MH.

Continuously, the CCD driving unit 11 moves vertically the image photographed by the CCD 2 in accordance with a vertical movement MV converted by the angular movement converter 10c.

Luminance and chrominance signals among the vertically moved video signals are processed to be displayed on a VCR by the luminance and chrominance processing unit 3, and the thusly processed video signal is stored in the memory 4.

Next, the memory controller converts a horizontal position value of a video signal stored in the memory device 4 in accordance with a horizontal movement MH converted by the angular movement converter 10c.

Through the above-mentioned procedures, a video signal with respect to which a movement due to a hand trembling is compensated is converted by the D/A converter 29, and then stored in the VCR.

Continuously, during an operation of another conventional hand trembling compensation apparatus of a camcorder, a light incident thereon through the lens group 21 is converted into a video signal by the CCD 22, and the converted video signal is converted into a digital video signal by the A/D converter 23.

Next, the field memory 24 stores by a unit of field a digital video signal converted by the A/D converter 23, and a moving vector detector 25 detects as a vector value a movement of a pixel corresponding to a digital video signal converted by the A/D converter 23.

Continuously, a microcomputer 26 compares the vector value detected by the moving vector detector 25 and the value stored therein, and as a result of the comparison, when the detected vector value is referred to a predetermined value corresponding to the horizontal or vertical direction, in other words, when it is referred to a constant direction, the microcomputer 26 recognizes the direction as an image movement which is caused by a predetermined movement such as a tilt, and doesn't control a hand trembling compensation.

In the meantime, in accordance with the above comparison, when the detected vector value is not referred to a predetermined value corresponding to a constant direction, the microcomputer 26 judges that a video signal movement is caused by a hand trembling, and then generates first and second control signals CS1 and CS2.

Thus, the field memory controller 27 removes a pixel obtained in accordance with a hand trembling among pixels corresponding to a video signal stored in the field memory 24 in accordance with a first control signal CS1 outputted from the microcomputer 26, and an electronic zoom 28 zooms a video signal outputted from the field memory 24 in accordance with a second signal CS2 outputted from the microcomputer 26, and compensates an image trembling caused by a hand trembling.

Through the above-mentioned procedure, a video signal, with respect to which the movement caused by a hand trembling is compensated, is converted into an analog video signal through a D/A converter 29, and recorded in the VCR.

As shown in Fig. 3, during an operation of another conventional hand trembling compensation apparatus of a camcorder, when the lens group 31 and the CCD 32 are moved by a hand trembling of a user when photographing, horizontal and vertical actuators 33H and 33V cause the lens group 31 to move in the opposite direction of a hand trembling, and compensate a video signal trembling caused by a hand trembling.

However, the conventional hand trembling compensation apparatus has disadvantages in that first, manufacturing cost is high since a specially-made CCD for PAL so as to vertically adjust the image photographed in the CCD is additionally necessary, and a separate memory should be additionally provided in the system so as to horizontally adjust the image photographed thereon, and second, picture quality is degraded due to the distortion and deformation of the photographed image, and third, current consumption is disadvantageously increased since electric power is additionally necessary so as to drive the CCD for PAL and the memory.

In addition, since another conventional hand trembling compensation apparatus of a camcorder removes picture photographed under a hand trembling condition and compensates a video trembling caused by a hand trembling by zooming the images to be photographed, errors occur on a video to be photographed and a picture quality is degraded when a motion picture is photographed.

In addition, since another conventional hand trembling compensation apparatus of a camcorder compensates a video photographed under a hand trembling condition by adapting technological mechanism, a video trembling compensation is not rapidly and accurately performed, and the construction of the system is made bigger.

### SUMMARY OF THE INVENTION

Accordingly, it is an object of the present invention to provide an apparatus for compensating a hand-trembling of a camcorder using a magnetic force and a method thereof, which overcomes the problems encountered in a conventional apparatus for compensating a hand-trembling of a camcorder using a magnetic force and a method thereof.

It is another object of the present invention to provide an improved apparatus for compensating a hand-trembling of a camcorder using a magnetic force and a method thereof, which is capable of capable of effectively compensating hand-trembling of a camcorder when photographing by providing a plurality of electromagnets at an inner circumferential surface of a camera lens barrel, and by supplying current thereto in a hand-trembling compensation mode of the operation, thereby magnetically floating lens groups within the camera lens barrel.

To achieve the above objects, in accordance with an embodiment of the present invention, there is provided an apparatus for compensating a hand-trembling of a camcorder using a magnetic force, which includes a key input unit provided with a hand trembling compensation mode key and a plurality of function keys; a controller for controlling a hand trembling compensation when a hand trembling compensation key of the key input unit is inputted; a current controller for controlling a current amount to be supplied to electromagnets in accordance with a control of the controller; and a magnetic flux generator for generating a magnetic force in accordance with a current supplied from the current controller, causing the lens group to be floated within a camera lens barrel, and compensating the movement of the lens group caused by a hand trembling.

To achieve the above objects, in accordance with another embodiment of the present invention, there is provided an apparatus for compensating a hand-trembling of a camcorder using a magnetic force, which includes a key input unit provided with a hand trembling compensation mode key and a plurality of function keys; a hand trembling detector for detecting a hand trembling and outputting a detected detecting signal; a controller for causing the lens group to move in the direction opposite to the direction of a hand trembling in accordance with a floating of the lens group and a detecting signal of the hand trembling detector when a hand trembling compensation mode key is inputted thereto; a current controller for variably controlling a current amount which is applied to electromagnets in accordance with a control of the controller; and a magnetic flux generator for generating a magnetic force in accordance with a current amount variably controlled by the current controller , causing a lens group to be floated from the camera lens barrel, thereby compensating a hand trembling.

To achieve the above objects, in accordance with another embodiment of the present invention, there is provided a method for compensating a hand-trembling of a camcorder using a magnetic force, which includes the steps of a first step for judging an input of a hand trembling compensation mode key; a second step for controlling a floating of a lens group within a camera lens barrel in accordance with an inputted hand trembling compensation mode key when a hand trembling compensation mode key is inputted thereto in accordance with the judgement of the first step; a third step for controlling a current amount which is applied to electromagnets in accordance with a control of the second step; and a fourth step for receiving a current amount controlled in the third step, generating magnetic force in accordance with a supplied current, causing a lens group to be floated within the camera lens barrel, thereby compensating a hand trembling.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
Fig. 1 is a block diagram of a conventional hand trembling compensation apparatus of a camcorder;
Fig. 2 is a block diagram of another conventional hand trembling compensation apparatus of a camcorder;
Fig. 3 is a block diagram of still another conventional hand trembling compensation apparatus of a camcorder;
Fig. 4 is a block diagram of a hand trembling compensation apparatus of a camcorder using a magnetic force according to a first embodiment of the present invention;
Fig. 5 is a block diagram of a hand trembling compensation apparatus of a camcorder using a magnetic force according to a second embodiment of the present invention;
Figs. 6A and 6B are views of the positions of electromagnets and fixed iron cores of a magnetic flux generator of Figs. 4 and 5 when the system is not in the hand trembling compensation mode according to the present invention;
Fig. 7 is a view of the positions of electromagnets and fixed iron cores of the magnetic flux generator of Figs. 4 and 5 when the system is in the hand trembling compensation mode according to the present invention; and
Fig. 8 is a view of a relationship between the trembling of a camera lens barrel and a lens group when a lens group of Figs. 4 and 5 is floated within the camera lens barrel in cooperation with a magnetic force generated between the electromagnets and the fixed iron core when the system is in the hand trembling compensation mode.

### DETAILED DESCRIPTION OF THE INVENTION

As shown in Fig. 4, a hand trembling compensation apparatus of a camcorder using a magnetic force according to a first embodiment of the present invention includes a key input unit 100 provided with a hand trembling compensation mode key and a plurality of function keys, a controller 101 for generating first and second control signals CS11 and CS12 to compensate a hand trembling when the system is in the hand trembling compensation mode, a current controller 102 for controlling a current amount to be supplied to four electromagnets 105, each is labelled as 105u, 105d, 105l and 105r in the drawings, in accordance with first and second control signals CS11 and CS12 outputted from the controller 101, respectively, a magnetic flux generator 107 having fixed iron cores each equipped on an outer circumferential surface of the lens group 103, and electromagnets mounted at an inner circumferential surface of the camera lens hood 104 for generating magnetic force in accordance with a current supplied thereto by the current controller 102, thereby allowing the lens group 103 to be floated within the camera lens hood 104 and compensating the movement of the lens group 103 caused by a hand trembling, and a magnetic floating detector 108 for detecting a floating of the lens group 103 using a current flowing at the electromagnets 105 and for outputting the thusly detected first and second control signals DS1 and DS2 to the controller 101.

The current controller 102 includes a current controller 102a for controlling a current which is applied to electromagnets 105u and 105d provided at outer circumferential surfaces of the lens group 103 in accordance with a first control signal CS11 outputted from the controller 101 and the current controller 102b for controlling a current which is supplied to electromagnets 105l and 105r equipped on right and left sides of the lens group 103 in accordance with a second control signal CS12 outputted from the controller 101.

The magnetic floating detector 108 includes a magnetic floating detector 108a which detects a floating of the lens group 103 within the camera lens barrel, which is caused in cooperation with the current applied to the electromagnets 105u and 105d equipped at an outer circumferential surface of the lens group 103, generates a first detecting signal DS1, and a magnetic floating detector 108b which detects a floating of the lens group 103, which is caused in cooperation with the current applied to the electromagnets 105l and 105r mounted at an outer circumferential surface of the lens group 103, generates a second detecting signal 108b.

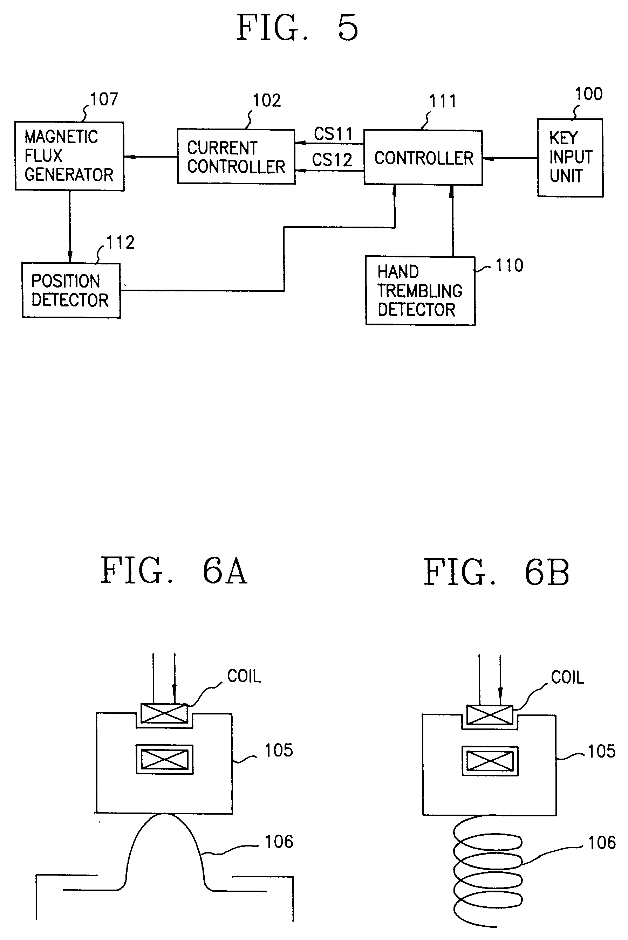

As shown in Figs. 6A and 6B, the fixed iron core 106 of the magnetic flux generator has a plate spring or a coil spring.

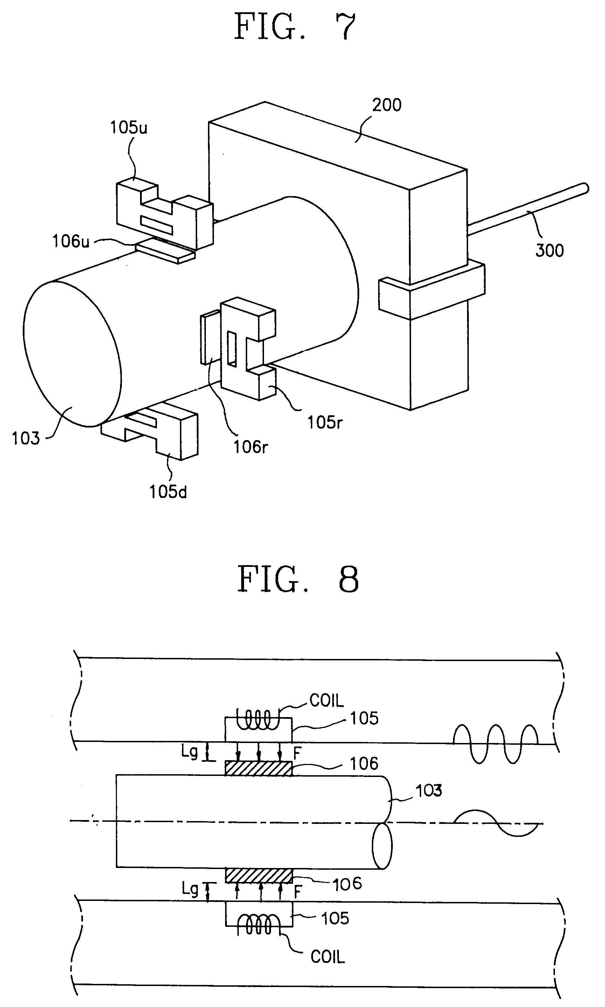

And, as shown in Fig. 7, the lens group 103 is affixed at an image sensor 200, and is movably connected to an image processing device (not illustrated) by a cable 300.

A picture trembling compensation method of a camcorder according to the present invention includes the steps of a first step for judging an input of a hand trembling compensation mode key, a second step for controlling a floating of a lens group within the camera lens barrel in accordance with an inputted image trembling compensation mode key when the system is in the input of a hand trembling compensation mode key in accordance with a judgement of the first step, a third step for controlling a current amount which is supplied to the electromagnets in accordance with a control of the second step, a fourth step for floating a lens group within the camera lens barrel and for compensating a movement caused by a hand trembling by generating magnetic force in accordance with the current of which the amount is controlled in the proceeding step, and a fifth step for detecting a floating of the lens group within the camera lens hood in accordance with the current supplied in the fourth step and orderly repeating the second step through the fourth step for the lens group to be floated in accordance with the detection.

An operation and process of a hand trembling compensation apparatus using a magnetic force according to the present invention will be described in detail with reference to a Figs. 6 and 8.

More than three pairs of the electromagnets and fixed iron cores of the magnetic flux generator are provided in the system. Here, the magnetic flux generators, in which four pairs of the electromagnets and fixed iron cores are provided, will now be explained.

As shown in Figs. 6A and 6B, when the system is not in the hand trembling compensation mode, the electromagnet 105u and the fixed iron core 106u, the electromagnet 105d and the fixed iron core 105d, the electromagnet 105l and the fixed iron core 106l, and the electromagnet 105r and the fixed iron core 105r are attached to each other, respectively.

When a hand trembling compensation mode key is inputted, a key signal corresponding to the selected hand trembling compensation mode is applied to the controller 101, the controller recognizes a hand trembling compensation mode in accordance with the inputted key signal.

After the above-mentioned recognition, the controller 101 generates first and second control signals CS11 and CS12 so as to float the lens group 103 within the camera lens barrel. The current controllers 102a and 102b are applied with first and second signals CS11 and CS12 outputted from the controller 101, control a current amount which is supplied to the electromagnets 105 in accordance with the applied first and second control signals CS11 and CS12, and output the thusly controlled current.

Thus, the electromagnets 105u, 105d, 105l, and 106r fixedly mounted at an inner circumferential surface of the camera lens barrel 104 are supplied with a current outputted from the current controllers 102a and 102b, and generates a magnet, and an electro-magnetic force F is generated in accordance with the generated magnet.

Here, since electro-magnetic force is proportional to the square of a current amount based on the principle of a general electromagnet mechanism, an electro-magnetic force is evenly generated when the electromagnets 105u, 105d, 105l, and 106r are applied with an identical electro-magnetic force.

Therefore, in accordance with the electromagnetic force generated under an action and reaction law, the plate spring 106 or the coil spring of the fixed iron core 106 is compressed in the direction of the arrow, as shown in Fig.8, the thusly compressed plate spring or coil spring has a restoring force to return to an original form.

When the electromagnetic force F and a restoring force are balanced, the electromagnet 105 and the plate spring 106 or the coil spring are spaced part from each other at a regular interval Lg.

Therefore, as shown in Fig. 8, the lens group 103 is floated within the camera lens barrel 104 and has a predetermined distance Lg between the inner surface of the electromagnets and the outer surface of the fixed iron core.

Next, a photocoupler of the magnetic floating detector 108 detects a floating of the lens group 103 in accordance with a current flow applied to the electromagnets 105, and outputs the thusly detected first and second detecting signals DS1 and DS2

Continuously, the controller 101 is applied with first and second detecting signals DS1 and DS2, respectively, outputted from the magnetic floating detector 107, and judge a floating of the lens group 103 in accordance with signals DS1 and DS2 inputted thereto.

As a result of the judgement, when the lens group 103 is not floated, for example, the left side of the lens group 103 is not floated with a predetermine distance from the inner surface of the electromagnets, the controller 101 outputs a second signal CS12 to control the right and left floating of the lens group 103, and the current controller 102b controls variably a current amount in accordance with the thusly outputted second control signal, and supply a coil of an electromagnet 1051 with the controlled current.

Thus, as described above, since the fixed iron core 1061 is compressed by an electromagnetic force F generated by the electromagnet 1051, the lens group is floated toward the left side of the lens group, and accordingly, a movement of the lens group caused by a hand trembling is automatically compensated.

The construction according to another embodiment of the present invention will be described in detail with reference to the accompanying drawings.

As shown in Fig. 5, another embodiment of a hand trembling compensation apparatus of a camcorder according to the present invention includes a key input unit 100 which is provided with a hand trembling compensation mode key and a plurality of function keys, a hand trembling detector 110 for detecting a hand trembling and then outputting the thusly detected detection signal, a controller 111 for generating first and second control signals CS11 and CS12 to cause a lens group to move in the opposite direction of a hand trembling in accordance with a floating of the lens group and a detection signal of the hand trembling detector 110 when a hand trembling compensation mode key of the key input unit 100 is inputted, a current controller 102 for controlling a current amount to be supplied to the electromagnets in accordance with first and second control signals CS11 and CS12 outputted fro the controller, a magnetic flux generator 107 for generating a magnetic force in accordance with a current amount controlled by the current controller 102 and for allowing the lens group to be floated within the camera lens barrel, and a position detector 112 for detecting a position of fixed iron cores and for outputting the thusly detected detecting signal to the controller 111.

Since the constructions of the current controller 102 and the magnetic flux generator 107 are the same as the preceding embodiment of the present invention, the description thereon will be omitted. Only the different construction will now be explained.

As shown in Figs. 6A and 6B, the fixed iron core 106 of the magnetic flux generator 107 has a plate spring 106 or coil spring.

As shown in Fig. 7, the lens group 103 is affixed to the image sensor 200, and is movably connected to the image processing unit(not illustrated) by a cable 300.

The operation of another embodiment of a hand trembling compensation apparatus of a camcorder using a magnetic force according to the present invention will be described in detail with reference to Figs. 6 and 8.

First, the operation that the lens group is floated within the camera lens barrel will be omitted since it is the same as the preceding embodiment.

When the camera lens barrel 104 is moved due to a hand trembling during its floating from the inner surface of the camera lens barrel 104, the lens group 103 is moved downwardly.

Here, when measuring a movement of the lens group in accordance with the movement of the camera lens barrel 104, the lens group is moved a little in the direction opposite to the direction of the camera lens barrel 104, while the camera lens barrel is moved more as compared to the movement of the lens group, as shown in the waveform of Fig. 8.

Therefore, the hand trembling detector 110 detects the movement of the lens group 103, and outputs the thusly detected detecting signal.

Here, the hand trembling detector 110 detects a movement of the lens group 103 by using a gyro sensor or a movement vector of an image photographed on the image sensor 200.

The position detector 112 detects the positions of the fixed iron cores 106u, 106d, 106l, and 106r, respectively, and outputs a detection signal corresponding to the detected positions.

Next, the controller 111 judges the direction of the movement of the lens group in accordance with detection signals outputted from the hand trembling detector 110 and the position detector 112.

Here, when the lens group 103 is judged to be moved upwardly, the controller 111 outputs a first control signal CS11 for compensating a upward and downward movement of the lens group 103. The current controller 102 controls variably a current amount in accordance with a first control signal CS11 outputted from the controller 111, and supplies the upper electromagnet with the thusly controlled current.

As a result, the lens group 103 moved upwardly is moved toward the center of the camera lens barrel.

In the above method, it is possible to compensate a video trembling caused by a hand trembling by moving the lens group 103 in the direction opposite to the direction of the hand trembling.

As described above, a hand trembling compensation apparatus of a camcorder using a magnetic force and a method thereof according to the present invention which has fixed iron cores correspondingly fixed at the outside of the lens group and electromagnets correspondingly fixed at the inside of a camera lens barrel, supplies electromagnets with a predetermined current when the system is in the hand trembling compensation mode, and has a lens group floating within the camera lens barrel, thereby automatically compensating a video trembling caused by a hand trembling. In addition, when a hand trembling of a user occurs after the floating of the lens group, the apparatus and method thereof is directed to detecting the hand trembling, allowing the lens group to move in the direction opposite to the direction of the thusly detected hand trembling, and automatically compensating the hand trembling. With the above method, it is possible to prevent a degrading of a picture quality, more rapidly and accurately compensate a video trembling caused by a hand trembling of a user, and minimize a camcorder.

In addition, since a CCD for PAL and a memory are not used separately, it is possible to reduce manufacturing cost.

Although the preferred embodiments of the present invention have been disclosed for illustrative purposes, those skilled in the art will appreciate that various modifications, additions and substitutions are possible, without departing from the scope and spirit of the invention as described in the accompanying claims.

## Claims

1. An apparatus for compensating a hand trembling of a camcorder using a magnetic force, comprising;
key input means provided with a hand trembling compensation mode key and a plurality of function keys;
control means for controlling a hand trembling compensation when a hand trembling compensation key of the key input means is inputted;
current controlling means for controlling a current amount to be supplied to electromagnets in accordance with a control of the control means; and
magnetic flux generating means for generating a magnetic force in accordance with a current supplied from the current controlling means, causing the lens group to be floated within a camera lens barrel, and compensating the movement of the lens group caused by a hand trembling.

2. The apparatus of claim 1, wherein said magnetic generating means includes a plurality of electromagnets fixed at an outer portion of the lens group, and a plurality of fixed iron cores fixed at an inner portion of the camera lens barrel.

3. The apparatus of claim 1, wherein said apparatus further includes magnetic floating detecting means for detecting a floating of the lens group in accordance with a current applied to a plurality of electromagnets of the magnetic flux generating means and for outputting the thusly detected detecting signal to the controlling means.

4. The apparatus of claim 3, wherein said magnetic floating detecting means includes a photocoupler.

5. The apparatus of claim 3, wherein a plurality of said electromagnets and said fixed iron cores of the magnetic flux generating means are provided more than three pairs, respectively, and are spaced apart from each other.

6. The apparatus of claim 5, wherein a plurality of said fixed iron cores are provided with a plate spring.

7. The apparatus of claim 5, wherein a plurality of said fixed iron cores are provided with a coil spring.

8. The apparatus of claim 5, wherein the lens group is affixed to an image sensor, and movably connected to an image processing unit by a cable.

9. A method for compensating a hand trembling of a camcorder using a magnetic force, comprising the steps of;
a first step for judging an input of a hand trembling compensation mode key;
a second step for controlling a floating of a lens group within a camera lens barrel in accordance with an inputted hand trembling compensation mode key when a hand trembling compensation mode key is inputted thereto in accordance with the judgement of the first step;
a third step for controlling a current amount which is applied to electromagnets in accordance with a control of the second step; and
a fourth step for receiving a current amount controlled in the third step, generating magnetic force in accordance with a supplied current, causing a lens group to be floated within the camera lens barrel, thereby compensating a hand trembling.

10. The method of claim 9, wherein said method further includes a fifth step for detecting a floating of the lens group floated within the camera lens barrel in accordance with a current applied in the fourth step, and orderly repeating the second step through the fourth step to cause the lens group to be floated.

11. An apparatus for compensating a hand trembling of a camcorder using a magnetic force, comprising;
key input means provided with a hand trembling compensation mode key and a plurality of function keys;
hand trembling detecting means for detecting a hand trembling and outputting a detected detecting signal;
control means for causing the lens group to move in the direction opposite to the direction of a hand trembling in accordance with a floating of the lens group and a detecting signal of the hand trembling detecting means when a hand trembling compensation mode key is inputted thereto;
current controlling means for variably controlling a current amount which is applied to electromagnets in accordance with a control of the controlling means; and
magnetic flux generating means for generating a magnetic force in accordance with a current amount variably controlled by the current controlling means , causing a lens group to be floated from the camera lens barrel, thereby compensating a hand trembling.

12. The apparatus of claim 11, wherein said apparatus further includes position detecting means for detecting the position of fixed iron cores of the magnetic flux generating means, and outputting the thusly detected detecting signal to the control means.

13. The apparatus of claim 11, wherein said hand trembling detecting means is directed to detecting a hand trembling using a gyro sensor.

14. The apparatus of claim 11, wherein said hand trembling compensation means is directed to using a movement vector of an image photographed by an image sensor, and detecting a hand trembling.

15. The apparatus of claim 11, wherein said magnetic flux generating means has a plurality of fixed iron cores mounted at an outer portion of the lens group and a plurality of electromagnets mounted at an inner portion of the camera lens barrel.

16. The apparatus of claim 15, wherein a plurality of said electromagnets and said fixed iron cores of the magnetic flux generating means are provided more than three pairs, respectively, and are spaced apart from each other.

17. The apparatus of claim 16, wherein a plurality of said fixed iron cores are provided with a plate spring, respectively.

18. The apparatus of claim 16, wherein a plurality of said fixed iron cores are provided with a coil spring, respectively.

19. The apparatus of claim 11, wherein said lens group is affixed to an image sensor, and movably connected to an image processing device by a cable.
